(19) Europäisches Patentamt
European Patent Office
Office européen des brevets

(11) **EP 2 176 624 B1**

(12) **EUROPÄISCHE PATENTSCHRIFT**

(45) Veröffentlichungstag und Bekanntmachung des Hinweises auf die Patenterteilung:
**10.10.2012 Patentblatt 2012/41**

(21) Anmeldenummer: **08774014.8**

(22) Anmeldetag: **17.07.2008**

(51) Int Cl.:
**G01D 5/20** (2006.01)

(86) Internationale Anmeldenummer:
**PCT/EP2008/005836**

(87) Internationale Veröffentlichungsnummer:
**WO 2009/015777 (05.02.2009 Gazette 2009/06)**

(54) **INDUKTIVER WEG- ODER DREHWINKELSENSOR MIT ZWISCHEN ZWEI SPULEN ANGEORDNETEM ABSCHIRMBLECH**

INDUCTIVE DISPLACEMENT OR ROTATIONAL ANGLE SENSOR WITH A SCREENING PLATE ARRANGED BETWEEN TWO COILS

DÉTECTEUR INDUCTIF DE PARCOURS OU D'ANGLE DE ROTATION DOTÉ D'UNE TÔLE DE BLINDAGE DISPOSÉE ENTRE DEUX BOBINES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **02.08.2007 DE 102007036200**

(43) Veröffentlichungstag der Anmeldung:
**21.04.2010 Patentblatt 2010/16**

(73) Patentinhaber: **KNORR-BREMSE Systeme für Nutzfahrzeuge GmbH
80809 München (DE)**

(72) Erfinder:
• **FEUCHT, Thomas
71299 Wimsheim (DE)**
• **GÜCKER, Ulrich
71701 Schwieberdingen (DE)**
• **RÖTHER, Friedbert
74389 Cleebronn (DE)**
• **HECKER, Falk
71706 Markgröningen (DE)**

(74) Vertreter: **Schönmann, Kurt
Knorr-Bremse AG
Moosacher Strasse 80
80809 München (DE)**

(56) Entgegenhaltungen:
**EP-A- 1 562 024      WO-A-00/25093
DE-C1- 19 955 144      FR-A- 2 790 313**

EP 2 176 624 B1

## Beschreibung

Stand der Technik

Die Erfindung geht aus von einem induktiven Weg- oder Drehwinkelsensor gemäß von Anspruch 1.

Ein induktiver Drehwinkelsensor ist beispielsweise aus der EP 0 797 078 A1 bekannt. Bei dem bekannten Drehwinkelsensor ist die Spule auf einen kastenförmigen Spulenkörper aus nicht magnetisch leitfähigem Material gewickelt, dessen seitliche Öffnungen teilweise durch Bleche aus magnetisch leitfähigem Material bedeckt sind. Das drehbare Beeinflussungselement ist dabei fahnenartig an der Welle befestigt und in jeder Drehlage vollständig innerhalb des Spulenkörpers gelagert. Je nach Drehlage überdeckt sich das drehbare Beeinflussungselement mit den seitlichen Blechen unterschiedlich. Das lineare Verhalten des Drehwinkelsensors wird dann durch die im wesentlichen lineare Abhängigkeit der Überdeckungsfläche, die sich zwischen dem drehbaren Beeinflussungselement und den Blechen bildet, erreicht. Durch eine Drehung der Welle verändert sich die Winkellage des drehbaren Beeinflussungselements und somit auch seine Überdeckungsfläche mit den Blechen, was in einer messbaren Änderung des magnetische Widerstands des magnetischen Kreises und damit der Induktivität resultiert.

Ein Drehwinkelsensor wird in der FR 2 790 313 A beschrieben. Dort sind gemäß dem Ausführungsbeispiel von Fig.5 zwei in Reihe und gleichsinnig verschaltete, an sich gegenüberliegenden Enden eines C-förmigen Kerns angeordneten Teilspulen offenbart, wobei ein ferromagnetischer Körper mit veränderlichem Querschnitt in den Luftspalt zwischen den Enden des Kerns eingeführt wird, um die Reluktanz, d.h. den magnetischen Widerstand des magnetischen Kreises zu verändern.

Demgegenüber besteht die Aufgabe der Erfindung darin einen induktiven Weg- oder Drehwinkelsensor der eingangs erwähnten Art derart weiter zu bilden, dass er eine höhere Messempfindlichkeit aufweist.

Diese Aufgabe wird erfindungsgemäß durch die Merkmale von Anspruch 1 gelöst.

Offenbarung der Erfindung

Die Erfindung basiert auf dem Gedanken, dass wenigstens zwei in Bezug zu einer Spulenachse koaxial angeordnete, separate Spulen mit einem axialen Zwischenraum vorgesehen sind, in welchen das Beeinflussungselement mit von seiner Lage abhängigem Überdeckungsgrad mit den von den Spulen erzeugten Magnetfeldern eintauchbar ist.

Das Einbringen des wenigstens teilweise aus einem magnetischen Material bestehenden Beeinflussungselements in den Zwischenraum zwischen den Spulen bewirkt eine Beeinflussung zum einen der Eigeninduktivitäten der Spulen und zum andern der Gegeninduktivität, was zur Erzeugung eines weg- oder drehwinkelabhängigen Messsignals genutzt wird. Die Ausführung gemäß der Erfindung bedingt einen besonders einfach aufgebauten und robusten Sensor.

Erfindungsgemäß sind die Spulen so gestaltet und derart mit Impulsen einer Wechselspannungsquelle erregbar, dass zumindest in den beiden Innenräumen der Spulen axial gegen sinnige Magnet Felder erzeugt werden und dass beim Eintauchen des Beeinflussungselements in den Zwischenraum die induktive Kopplung der Spulen geschwächt wird. Vorzugsweise besteht das Beeinflussungselement wenigstens teilweise aus einem ferromagnetischen Material. In diesem Fall findet im Wesentlichen keine Kopplung zwischen den Induktivitäten L der Spulen statt. Die relative Änderung der Gegeninduktivität M bei mit und ohne in den Zwischenraum eingetauchtem oder eingedrehtem Beeinflussungselement ist dann größer als die relative Änderung der einzelnen Eigeninduktivitäten L der Spulen.

Durch die in den Unteransprüchen aufgeführten Maßnahmen sind vorteilhafte Weiterbildungen und Verbesserungen der in den unabhängigen Ansprüchen angegebenen Erfindung möglich.

Zur Realisierung eines Drehwinkelsensors ist das Beeinflussungselement besonders bevorzugt um eine zur Spulenachse parallele Welle zur Übertragung der zu sensierenden Bewegung drehbar ausgebildet und mit von seiner Drehlage abhängigem Überdeckungsgrad mit dem von den Spulen erzeugten Magnetfeld in den axialen Zwischenraum eintauchbar.

Eine besonders einfache Ausführung ergibt sich, wenn das drehbare Beeinflussungselement ein bezogen auf die Welle exzentrischer gelagerter Körper ist. Weiterhin kann der Querschnitt des drehbaren Beeinflussungselements derart ausgebildet sein, dass die Induktivität der Spulen eine lineare Abhängigkeit vom Drehwinkel des drehbaren Beeinflussungselements zumindest in einem Drehwinkelbereich kleiner gleich 360 Grad aufweist. Nicht zuletzt trägt zu einer einfachen und kostengünstigen Ausführung eines Drehwinkelsensors bei, wenn das drehbare Beeinflussungselement in einer Ebene senkrecht zur Welle oder senkrecht zur Spulenachse schwenkbar angeordnet und es beispielsweise in zumindest einer Drehlage den Stirnflächen der Spulen zwischengeordnet ist. Denn dann kann sich das drehbare Beeinflussungselement mit von seiner Drehlage abhängigem Überdeckungsgrad mit einer gedachten axialen Verlängerung der Spuleninnenräume überdecken, in welchen die von den Spulen erzeugten Magnetfeldlinien konzentriert sind.

Weiterhin sind die wenigstens zwei Spulen beispielsweise in Reihe geschaltet.

Besonders bevorzugt ist der axiale Zwischenraum zwischen den Spulen klein gegenüber der Längserstreckung der Spulen in Richtung der Spulenachse.

Genaueres geht aus der folgenden Beschreibung von Ausführungsbeispielen hervor.

Zeichnungen

Nachstehend ist ein Ausführungsbeispiel der Erfindung in der Zeichnung dargestellt und in der nachfolgenden Beschreibung näher erläutert. In der Zeichnung zeigt:

Fig.1      eine schematische Querschnittsansicht eines Drehwinkelsensors gemäß einer bevorzugten Ausführungsform der Erfindung;

Fig.2      eine Stirnansicht des Drehwinkelsensors von Fig.1;

Fig.3      ein schematisches Schaltbild von zwei bei dem Drehwinkelsensor von Fig.1 und Fig.2 verwendeten gegensinnig verschalteten Spulen gemäß einer bevorzugten Ausführungsform der Erfindung;

Fig.4a bis 4c      den Verlauf der Magnetfeldlinien im Bereich der gegensinnig verschalteten Spulen von Fig.3 in Abhängigkeit von der Drehstellung eines in den Zwischenraum zwischen den Spulen eingebrachten ferromagnetischen Beeinflussungselements;

Fig.5      ein schematisches Schaltbild von zwei bei dem Drehwinkelsensor von Fig.1 und Fig.2 verwendeten gleichsinnig verschalteten Spulen;

Fig.6a bis 6c      den Verlauf der Magnetfeldlinien im Bereich der gleichsinnig verschalteten Spulen von Fig.5 in Abhängigkeit von der Drehstellung eines in den Zwischenraum zwischen den Spulen eingebrachten para- bzw. diamagnetischen Beeinflussungselements.

Beschreibung des Ausführungsbeispiels

Eine Anwendung eines Drehwinkelsensors 1 gemäß der Erfindung besteht beispielsweise darin, dass bei einer elektronischen Niveauregelung einer Luftfederung eines Fahrzeugs das Niveau, d.h. der Abstand zwischen dem Fahrzeugrahmen und einer Achse gemessen wird und dazu der Drehwinkelsensor 1 an einem Rahmen des Fahrzeugs befestigt ist und die Bewegung zwischen dem Fahrzeugrahmen und der Achse über eine Hebelmechanik übertragen wird. Der vom Drehwinkelsensor gemessene Winkel stellt dann ein Maß für das Niveau des Fahrzeugrahmens in Bezug zur Achse dar.

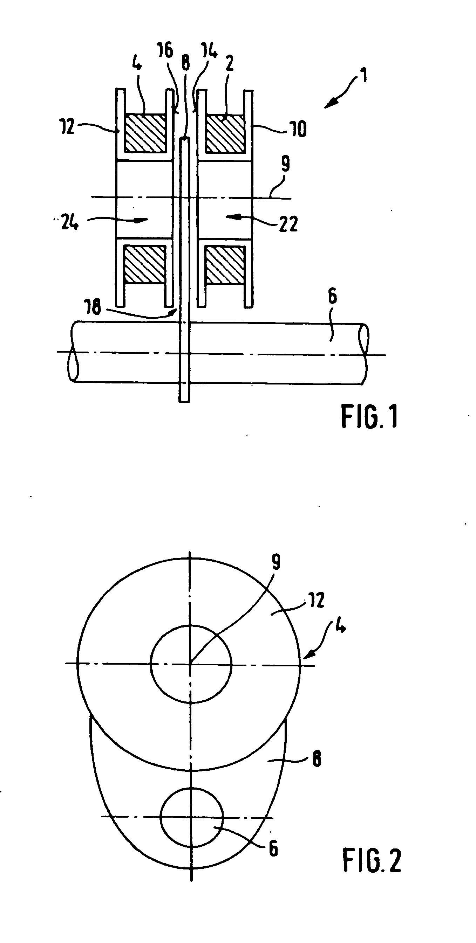

In Fig.1 ist zur beispielhaften Erläuterung der Erfindung ein Drehwinkelsensor 1 gemäß einer bevorzugten Ausführungsform der Erfindung gezeigt. Der Drehwinkelsensor 1 dient zur Wandelung einer mechanischen Drehbewegung in ein elektrisches Signal, welches proportional zum Drehwinkel ist, im Rahmen eines berührungslosen Messverfahrens.

Hierzu beinhaltet der Drehwinkelsensor 1 wenigstens zwei mit elektrisch leitfähigen Windungen versehene Spulen 2, 4 sowie ein mit diesen zusammenwirkendes, um eine Welle 6 zur Übertragung der zu sensierenden Drehbewegung drehbares Beeinflussungselement 8. Abhängig von seiner Drehlage soll das drehbare Beeinflussungselement 8 eine unterschiedliche Induktivität L der Spulen 2, 4 hervorrufen.

Im folgenden seien die für das Messprinzip dienenden physikalischen Grundlagen beschrieben. Allgemein erzeugt ein Strom I in einer Zylinderspule ein magnetisches Feld mit einer Feldstärke H:

$$H = I \cdot \frac{n}{l} \qquad (1)$$

wobei n die Windungszahl und l die Spulenlänge ist. Die Feldstärke H erzeugt eine Kraftflussdichte B

$$B = \mu_r \cdot \mu_0 \cdot H \qquad (2)$$

wobei $\mu_0$ die Permeabilität und $\mu_r$ die Permeabilitätszahl ist, wobei für letztere gilt:

     $\mu_r$ <1 für diamagnetische Materialien,

     $\mu_r$ >1 für paramagnetische Materialien, und

     $\mu_r$>>1 für ferromagnetische Materialien.

Eine Änderung der Kraftflussdichte B induziert in der Spule eine Spannung $U_{ind}$:

$$U_{ind} = n \cdot \dot{B} \cdot A \qquad (3)$$

Aus den Gleichungen (1) bis (3) ergibt sich dann für die induzierte Spannung $U_{ind}$:

$$U_{ind} = n \cdot A \cdot \mu_r \cdot \mu_0 \cdot \frac{n}{l} \cdot \dot{I} \qquad (4)$$

Für die Induktivität L der Spule ergibt sich dann:

$$L = n^2 \cdot \mu_r \cdot \mu_0 \cdot \frac{A}{l} \qquad (5)$$

Die beiden Spulen 2, 4 sind in Bezug zu einer gemeinsamen Spulenachse 9 koaxial angeordnet und separat, d.h. jede der Spulen 2, 4 besitzt einen eigenen Spulenkörper 10, 12, auf welchen je eine Spulenwicklung aus elektrisch leitfähigem Draht, beispielsweise Kupferdraht aufgewickelt ist sowie eigene Anschlüsse. Zwischen den zueinander gerichteten, senkrecht zur Spulenachse 9 angeordneten Stirnflächen 14, 16 der Spulen 2, 4 ist ein axialer Zwischenraum 18 vorgesehen, in welchen das um die zur Spulenachse 9 parallele Welle 6 drehbare Beeinflussungselement 8 mit von seiner Drehlage abhängigem Überdeckungsgrad mit dem von den Spulen 2, 4 erzeugten Magnetfeld eintauchbar ist.

Die beiden Spulen 2, 4 sind vorzugsweise hohlzylindrisch ausgebildet und weisen je einen Spuleninnenraum 22, 24 auf, wobei der Spuleninnenraum 22 der einen Spule 2 unter Überbrückung des Zwischenraums 18 mit einer gedachten Verlängerung des Spuleninnenraums 24 der anderen Spule 4 fluchtet, weil die Spulen 2, 4 Zylinderspulen mit vorzugsweise gleich großem Innen- und Außendurchmesser sind. Der axiale Zwischenraum 18 ist bevorzugt klein gegenüber der Längserstreckung der Spulen 2, 4 in Richtung der Spulenachse 9.

Die Spulen 2, 4 sind vorzugsweise zueinander gegensinnig oder gleichsinnig in Reihe geschaltet, so dass zumindest in ihren zugeordneten Spuleninnenräumen 22, 24 gegensinnige oder gleichsinnige Magnetfelder erzeugt werden, d.h. dass die Richtung der Magnetfeldlinien der Spulen 2, 4 wenigstens im Bereich der Spuleninnenräume 22, 24 gleichsinnig bzw. gleichgerichtet oder gegensinnig bzw. entgegengerichtet ist.

Der Querschnitt des drehbaren Beeinflussungselements 8 ist insbesondere derart ausgebildet, dass die Induktivität L der Spulen 2, 4 eine lineare Abhängigkeit vom Drehwinkel des drehbaren Beeinflussungselements 8 zumindest in einem Drehwinkelbereich kleiner gleich 360 Grad aufweist. Wie aus Fig.2 hervorgeht, ist das drehbare Beeinflussungselement 8 bevorzugt ein bezogen auf die Welle 6 exzentrisch gelagerter Körper, hier beispielsweise mit einem näherungsweise nockenförmigen Querschnitt. Weiterhin ist das drehbare Beeinflussungselement 8 beispielsweise einstückig ausgebildet. Alternativ könnte das drehbare Beeinflussungselement 8 mehrere an seinem Umfang angeordnete Ausformungen enthalten, welche je einem Messbereich zugeordnet sind, beispielsweise 120 Grad. In diesem Fall ist das drehbare Beeinflussungselement 8 beispielsweise kleeblatt- oder zahnradförmig ausgebildet.

Weiterhin ist das drehbare Beeinflussungselement 8 bevorzugt wenigstens teilweise aus einem ferromagnetischen Material gefertigt, wobei darunter ein magnetisch leitfähiges oder weich-magnetisches Material verstanden wird, welches eine Permeabilitätszahl $\mu \gg 1$ und eine magnetische Suszeptibilität $\chi > 0$ aufweist. Zu einem solchen ferromagnetischen Material zählen beispielsweise Eisen, Kobalt oder Nickel. Sie stärken das sie durchdringende magnetische Feld erheblich, indem sie den magnetischen Widerstand verringern.

Alternativ kann das drehbare Beeinflussungselement 8 mehrstückig und/oder wenigstens teilweise aus einem paramagnetischen Material gefertigt sein, d.h. dass das Material eine Permeabilitätszahl $\mu > 1$ und eine magnetische Suszeptibilität $\chi > 0$ aufweist. Zu einem solchen ferromagnetischen Material zählen beispielsweise Platin oder Aluminium. Sie stärken das sie durchdringende magnetische Feld geringfügig.

Nicht zuletzt könnte das drehbare Beeinflussungselement 8 wenigstens teilweise aus einem diamagnetischen Material gefertigt sein, d.h. dass das Material eine Permeabilitätszahl $\mu < 1$ und eine magnetische Suszeptibilität $\chi < 0$ aufweist. Zu einem solchen diamagnetischen Material zählen beispielsweise Kupfer oder Silber. Sie schwächen das sie durchdringende magnetische Feld geringfügig.

Besonders bevorzugt ist das drehbare Beeinflussungselement 8 aus einem Metallblech gefertigt, beispielsweise aus einem Aluminiumblech. Das Einbringen des drehbaren, wenigstens teilweise aus einem magnetischen Material bestehenden Beeinflussungselements 8 in den Zwischenraum 18 zwischen den beiden Spulen 2, 4 bewirkt eine Beeinflussung zum einen der Eigeninduktivitäten $L_1$ und $L_2$ der beiden Spulen 2, 4 und zum andem der Gegeninduktivität M.

Vor diesem Hintergrund ist die Funktionsweise des erfindungsgemäßen Drehwinkelsensors 1 wie folgt : Durch eine zu sensierende Drehung der Welle 6 in eine beliebige Richtung verändert sich die Winkellage des drehbaren Beeinflussungselements 8 und somit auch seine Eindringtiefe in den Zwischenraum 18 zwischen den Spulen 2, 4. Diese Veränderung der Eindringtiefe oder der Überlagerungsfläche mit der gedachten axialen Verlängerung der Spuleninnenräume 22, 24 verändert die Eigeninduktivitäten $L_1$ und $L_2$ der Spulen 2, 4 und deren Gegeninduktivität M, was zur Signalgewinnung genutzt wird.

Die Erregung der Spulen 2, 4 kann beispielsweise durch einen Mikroprozessor erfolgen, welcher rechteckförmige, sinusförmige oder beliebige Impulse einer Wechselspannungsquelle in die Spulen 2, 4 einspeist. Aus der Dauer des Abklingens des Impulses auf einen unteren Grenzwert kann dann die Gesamtinduktivität der Spulen 2, 4 bestimmt werden. In diesem Fall wird der an der Welle 6 wirkende Drehwinkel mittels einer Zeitmessung bestimmt.

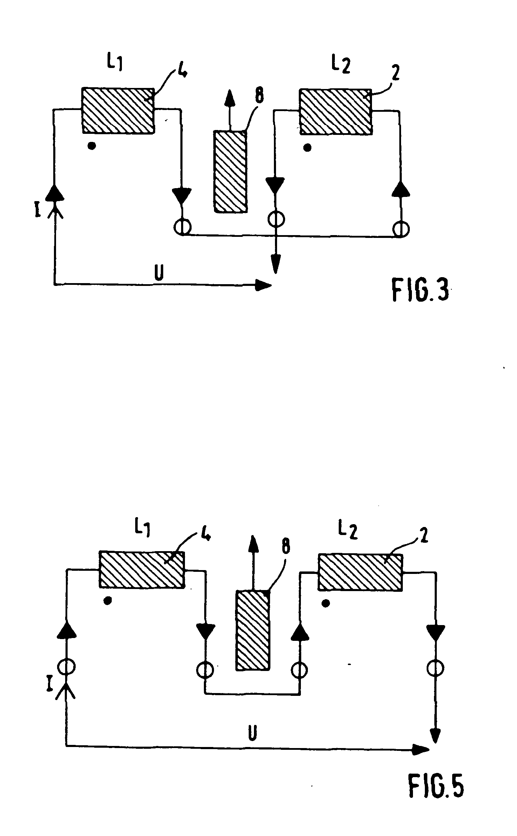

In Fig.3 ist als bevorzugte Ausführungsform eine gegensinnige Verschaltung der Spulen 2, 4 gezeigt, wobei der Punkt den Wicklungssinn der Windungen angibt. Wie dort veranschaulicht, ist dann die Richtung des Stroms I durch die Spulen 2, 4 gegenläufig. Bei diesem Ausführungsbeispiel ist das drehbare Beeinflussungselement 8 zumindest in dem Überdeckungsbereich mit den beiden Spulen 2, 4 aus einem ferromagnetischen Material gefertigt.

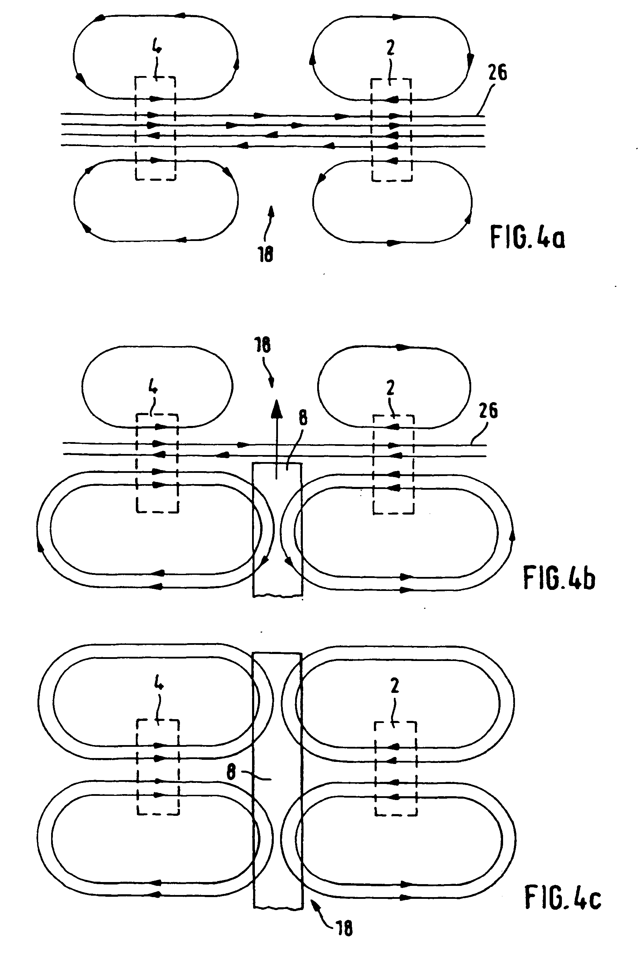

Fig.4a bis Fig.4c zeigt demgegenüber den Verlauf der Magnetfeldlinien 26 im Bereich der gegensinnig verschalteten Spulen 2, 4 von Fig.3 in Abhängigkeit von der Eintauchtiefe des drehbaren Beeinflussungselements 8 in den Zwischenraum 18 zwischen den Spulen 2 und 4, wobei Fig.4a die Situation des noch nicht eingetauchten, Fig.4b die Situation des teilweise eingetauchten und Fig.4c die Situation des voll eingetauchten ferromagnetischen Beeinflussungselements 8 zeigt.

Wenn das drehbare Beeinflussungselement 8 noch nicht in den Zwischenraum 18 eingedreht ist, sorgt die gegensinnige Verschaltung der beiden Spulen 2 und 4 dafür, dass die durch die Spulen 2, 4 erzeugten Magnetfeldlinien 26 im Bereich der Spuleninnenräume 22, 24 gegensinnig zueinander verlaufen, wie aus Fig.4a hervorgeht. Die Eigeninduktivitäten $L_1$ und $L_2$ der Spulen 2, 4 sind unter der Annahme gleich aufgebauter Spulen 2, 4 gleich groß und minimal, die Gegeninduktivität M dagegen maximal und es gilt für die Gesamtinduktivität $L_{ges}$:

$$L_{ges} = L_1 + L_2 - 2M \qquad (6)$$

Im vorliegenden Fall ist diese Gesamtinduktivität $L_{ges}$ wegen der geringen Eigeninduktivitäten $L_1$ und $L_2$ und der relativ großen Gegeninduktivität M relativ klein. Es kommt zu einer Kopplung der beiden Spulen 2, 4.

Das teilweise Eintauchen des Beeinflussungselements 8 in den Zwischenraum 18 gemäß Fig.4b bedingt demgegenüber eine schwächere Kopplung der beiden Spulen 2, 4.

Wenn hingegen das drehbare Beeinflussungselement 8 in den Zwischenraum 18 maximal eingedreht oder eingetaucht ist, sind die Eigeninduktivitäten $L_1$ und $L_2$ aufgrund der Ablenkung bzw. Umlenkung der Magnetfeldlinien 26 durch das ferromagnetische Beeinflussungselement 8 maximal, die Gegenkopplung M jedoch minimal, so dass die Gesamtinduktivität $L_{ges}$ gemäß Gleichung (6) relativ groß ist. Das in den Zwischenraum 18 eingebrachte ferromagnetische Beeinflussungselement 8 schirmt die beiden Spulen 2, 4 quasi gegeneinander ab. Es findet in diesem Fall folglich im wesentlichen keine Kopplung zwischen den Induktivitäten $L_1$ und $L_2$ mehr statt.

Die relative Änderung der Gegeninduktivität M bei mit und ohne in den Zwischenraum 18 eingedrehtem Beeinflussungselement 8 (Fig.4a und Fig.4c) ist größer als die relative Änderung der einzelnen Eigeninduktivitäten $L_1$ und $L_2$ der beiden Spulen 2, 4.

In Fig.5 ist als weitere Ausführungsform eine gleichsinnige Verschaltung der Spulen 2, 4 gezeigt. Wie dort durch Pfeile veranschaulicht, ist dann die Richtung des Stroms I in den Spulen 2, 4 gleichläufig. Bei diesem Ausführungsbeispiel ist das drehbare Beeinflussungselement 8 zumindest in dem Überdeckungsbereich mit den beiden Spulen 2, 4 aus einem diamagnetischen oder paramagnetischen Material gefertigt.

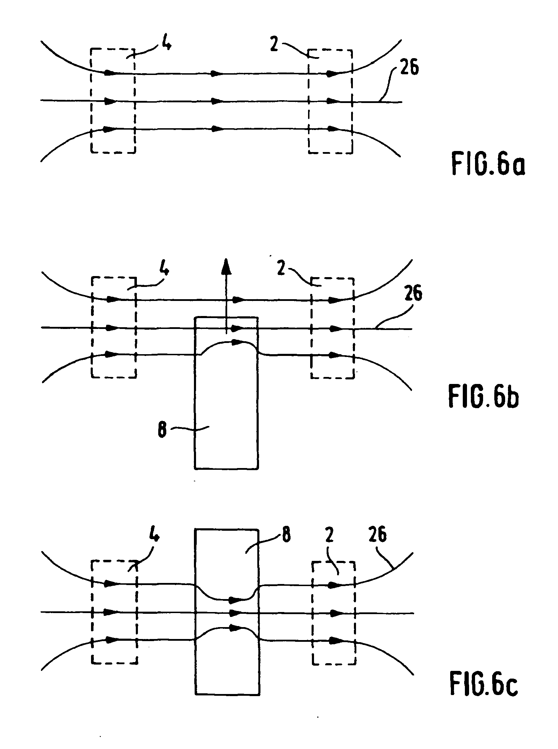

Fig.6a bis Fig.6c zeigt demgegenüber den Verlauf der Magnetfeldlinien 26 im Bereich der gleichsinnig verschalteten Spulen 2, 4 von Fig.5 in Abhängigkeit von der Eintauchtiefe des drehbaren Beeinflussungselements 8 in den Zwischenraum 18 zwischen den Spulen 2, 4, wobei Fig.6a die Situation des noch nicht eingetauchten, Fig.6b die Situation des teilweise eingetauchten und Fig.6c die Situation des voll eingetauchten Beeinflussungselements 8 zeigt.

Wenn das drehbare Beeinflussungselement 8 noch nicht in den Zwischenraum 18 eingedreht ist, sorgt die gleichsinnige Verschaltung der beiden Spulen 2 und 4 dafür, dass die durch die Spulen 2, 4 erzeugten Magnetfeldlinien 26 im Bereich der Spuleninnenräume 22, 24 gleichsinnig zueinander verlaufen, wie aus Fig.4a hervorgeht. Die Eigeninduktivitäten $L_1$ und $L_2$ der Spulen 2, 4 sind unter der Annahme gleich aufgebauter Spulen 2, 4 gleich groß und minimal, die Gegeninduktivität M ebenfalls minimal und es gilt für die Gesamtinduktivität $L_{ges}$:

$$L_{ges} = L_1 + L_2 + 2M \qquad (7)$$

Im vorliegenden Fall ist diese Gesamtinduktivität $L_{ges}$ wegen der geringen Eigeninduktivitäten $L_1$ und $L_2$ und der geringen Gegeninduktivität M relativ klein.

Wenn hingegen das drehbare Beeinflussungselement 8 ein Stück weit in den Zwischenraum 18 eingedreht wird, erhöht sich die Kraftflussdichte B, wodurch sich auch die Eigeninduktivitäten $L_1$ und $L_2$ der Spulen 2, 4 erhöhen (Fig.6b).

Wenn das Beeinflussungselement 8 vollständig in den Zwischenraum 18 eingedreht ist, wird die Kraftflussdichte B maximal, woraus sich maximale Eigeninduktivitäten $L_1$ und $L_2$ ergeben, weiterhin ist auch die Gegenkopplung M maximal, so dass die Gesamtinduktivität $L_{ges}$ gemäß Gleichung (7) maximal groß ist.

Bei dieser Ausführungsform ist bei mit und ohne in den Zwischenraum 18 eingedrehtem Beeinflussungselement 8 (Fig.6a und Fig.6c) die relative Änderung der einzelnen Eigeninduktivitäten $L_1$ und $L_2$ der beiden Spulen 2, 4 größer als die relative Änderung der Gegeninduktivität M.

Die Erfindung ist nicht auf Drehwinkelsensoren beschränkt. Sie kann auch bei Wegsensoren angewandt werden, bei welchen das Beeinflussungselement 8 mit einer linearen Bewegung in den Zwischenraum 18 zwischen den Spulen 2, 4 mit von seiner Position abhängigem Überdeckungsgrad mit dem von den Spulen 2, 4 erzeugten Magnetfeldern eintauchbar ist.

Bezugszeichenliste

1    Drehwinkelsensor
2    Spule

4　　　Spule
6　　　Welle
8　　　Beeinflussungselement
9　　　Spulenachse
10　　Spulenkörper
12　　Spulenkörper
14　　Stirnfläche
16　　Stirnfläche
18　　Zwischenraum
22　　Spuleninnenraum
24　　Spuleninnenraum
26　　Magnetfeldlinien

## Patentansprüche

1. Induktiver Weg- oder Drehwinkelsensor (1) beinhaltend wenigstens zwei elektrische, mit Windungen versehene induktiv gekoppelte Spulen (2, 4) sowie ein mit diesen zusammenwirkendes Beeinflussungselement (8), welches abhängig von seiner Lage unterschiedliche Induktivitäten (L1, L2, M) der wenigstens zwei Spulen (2, 4) hervorruft, wobei die wenigstens zwei Spulen (2,4) in Bezug zu ihrer gemeinsamen Spulenachse (9) koaxial und separat mit einem axialen Zwischenraum (18) angeordnet sind, in welchen das Beeinflussungselement (8) mit von seiner Lage abhängigem Überdeckungsgrad mit den von den Spulen (2, 4) erzeugten Magnetfeldern eintauchbar ist, wobei die Spulen (2, 4) so gestaltet und geschaltet sind, dass bei Beaufschlagung mit Impulsen einer Wechselspannungsquelle zumindest in den beiden Innenräumen (22, 24) der Spulen (2, 4) axial gegensinnige Magnetfelder erzeugt werden und dass beim Eintauchen des Beeinflussungselements (8) in den Zwischenraum (18) die induktive Kopplung der Spulen (2, 4) geschwächt wird.

2. Induktiver Weg- oder Drehwinkelsensor nach Anspruch 1, **dadurch gekennzeichnet, dass** die Spulen (2, 4) zueinander in Reihe geschaltet sind.

3. Induktiver Weg- oder Drehwinkelsensor nach einem der vorhergehenden Ansprüche, **dadurch gekennzeichnet, dass** das Beeinflussungselement (8) wenigstens teilweise aus einem ferromagnetischen Material besteht.

4. Induktiver Weg- oder Drehwinkelsensor nach einem der vorhergehenden Ansprüche, **dadurch gekennzeichnet, dass** der axiale Zwischenraum (18) klein gegenüber der Längserstreckung der Spulen (2, 4) in Richtung der Spulenachse (9) ist.

5. Induktiver Weg- oder Drehwinkelsensor nach einem der vorhergehenden Ansprüche, **dadurch gekennzeichnet, dass** das Beeinflussungselement (8) um eine zur Spulenachse (9) parallele Welle (6) zur Übertragung einer zu sensierenden Drehbewegung drehbar ausgebildet und mit von seiner Drehlage abhängigem Überdeckungsgrad mit den von den Spulen (2, 4) erzeugten Magnetfeldern in den axialen Zwischenraum (18) eintauchbar ist.

6. Induktiver Weg- oder Drehwinkelsensor nach Anspruch 5, **dadurch gekennzeichnet, dass** das Beeinflussungselement (8) ein bezogen auf die Welle (6) exzentrischer gelagerter Körper ist.

7. Induktiver Weg- oder Drehwinkelsensor nach Anspruch 5 oder 6, **dadurch gekennzeichnet, dass** der Querschnitt des drehbaren Beeinflussungselements (8) derart ausgebildet ist, dass die Induktivität ($L_1$, $L_2$, M) der Spulen (2, 4) eine lineare Abhängigkeit vom Drehwinkel des drehbaren Beeinflussungselements (8) zumindest in einem Drehwinkelbereich kleiner gleich 360 Grad aufweist.

8. Induktiver Weg- oder Drehwinkelsensor nach einem der Ansprüche 5 bis 7, **dadurch gekennzeichnet, dass** das drehbare Beeinflussungselement (8) in einer Ebene senkrecht zur Welle (6) oder senkrecht zur Spulenachse (9) schwenkbar angeordnet ist.

9. Induktiver Weg- oder Drehwinkelsensor nach einem der Ansprüche 5 bis 8, **dadurch gekennzeichnet, dass** sich das drehbare Beeinflussungselement (8) mit von seiner Drehlage abhängigem Überdeckungsgrad mit einer gedachten axialen Verlängerung der Spuleninnenräume (22, 24) überdeckt.

10. Induktiver Weg- oder Drehwinkelsensor nach einem der Ansprüche 5 bis 9, **dadurch gekennzeichnet, dass** das drehbare Beeinflussungselement in zumindest einer Drehlage den Stirnflächen (14, 16) der Spulen (2, 4) zwischengeordnet ist.

11. Induktiver Weg- oder Drehwinkelsensor nach wenigstens einem der vorhergehenden Ansprüche, **dadurch gekennzeichnet, dass** wenigstens eine Spule (2, 4) einen Spuleninnenraum (22, 24) mit einem zylindrischen oder beliebigen Querschnitt aufweist.

12. Induktiver Weg- oder Drehwinkelsensor nach wenigstens einem der vorhergehenden Ansprüche, **dadurch gekennzeichnet, dass** wenigstens eine der Spulen (2, 4) einen Spulenkern aus einem ferromagnetischen Material oder aus einem Kunststoff aufweist.

## Claims

1. Inductive displacement or rotational angle sensor (1) comprising at least two inductively coupled electrical coils (2, 4) which are provided with turns, and an influencing element (8) which interacts with said coils and produces different inductances ($L_1$, $L_2$, M) of the least two coils (2, 4) as a function of its position, the at least two coils (2, 4) being arranged coaxially and separately with respect to their shared coil axis (9) and having an axial interspacing (18), it being possible for the influencing element (8) to enter said interspacing with a degree of overlap, which is dependent on its position, with the magnetic fields which are generated by the coils (2, 4), the coils (2, 4) being designed and connected such that, when pulses of an AC voltage source are applied, axially opposed magnetic fields are generated at least in the two interior spaces (22, 24) in the coils (2, 4), and that the inductive coupling of the coils (2, 4) is weakened when the influencing element (8) enters the interspacing (18).

2.  Inductive displacement or rotational angle sensor according to Claim 1, **characterized in that** the coils (2, 4) are connected to one another in series.

3.  Inductive displacement or rotational angle sensor according to one of the preceding claims, **characterized in that** the influencing element (8) at least partially comprises a ferromagnetic material.

4.  Inductive displacement or rotational angle sensor according to one of the preceding claims, **characterized in that** the axial interspacing (18) is small compared to the longitudinal extent of the coils (2, 4) in the direction of the coil axis (9).

5.  Inductive displacement or rotational angle sensor according to one of the preceding claims, **characterized in that** the influencing element (8) is designed to rotate about a shaft (6) which is parallel to the coil axis (9) in order to transmit a rotary movement which is to be sensed, and can enter the axial interspacing (18) with a degree of overlap, which is dependent on its rotation position, with the magnetic fields which are generated by the coils (2, 4).

6.  Inductive displacement or rotational angle sensor according to Claim 5, **characterized in that** the influencing element (8) is a body which is eccentrically mounted in relation to the shaft (6).

7.  Inductive displacement or rotational angle sensor according to Claim 5 or 6, **characterized in that** the cross section of the rotatable influencing element (8) is designed in such a way that the inductance ($L_1$, $L_2$, M) of the coils (2, 4) has a linear dependence on the rotational angle of the rotatable influencing element (8) at least in a rotational angle range of less than or equal to 360 degrees.

8.  Inductive displacement or rotational angle sensor according to one of Claims 5 to 7, **characterized in that** the rotatable influencing element (8) is arranged such that it can pivot in a plane perpendicular to the shaft (6) or perpendicular to the coil axis (9).

9.  Inductive displacement or rotational angle sensor according to one of Claims 5 to 8, **characterized in that** the rotatable influencing element (8) overlaps with an imaginary axial extension of the coil interior spaces (22, 24) with a degree of overlap which is dependent on its rotation position.

10. Inductive displacement or rotational angle sensor according to one of Claims 5 to 9, **characterized in that** the rotatable influencing element is interposed between the end faces (14, 16) of the coils (2, 4) in at least one rotation position.

11. Inductive displacement or rotational angle sensor according to at least one of the preceding claims, **characterized in that** at least one coil (2, 4) has a coil interior space (22, 24) with a cylindrical or arbitrary cross section.

12. Inductive displacement or rotational angle sensor according to at least one of the preceding claims, **characterized in that** at least one of the coils (2, 4) has a coil core comprising a ferromagnetic material or comprising a plastic.

**Revendications**

1.  Détecteur inductif de parcours ou de l'angle de rotation (1), comprenant au moins deux bobines électriques (2, 4) couplées de façon inductive et pourvues des spires ainsi qu'un élément de l'influence (8) à interaction avec les bobines, qui, en fonction de sa position, induit des résistances inductives différentes ($L_1$, $L_2$, M) desdites au moins deux bobines (2, 4), auxdites au moins deux bobines (2, 4) étant disposées en position coaxiale et séparée, à un interstice axial (18), relativement à leur axe de bobines (9) commun, dans lequel interstice ledit élément de l'influence (8) peut se plonger, en fonction de sa position, à un degré de recouvrement avec les champs magnétiques engendrés par lesdites bobines (2, 4), dans lequel lesdites bobines (2, 4) sont conçues et reliées d'une telle manière, qu'au cas d'application des impulsions d'une source de tension alternative au moins dans les deux espaces intérieures (22, 24) desdites bobines (2, 4) des champs magnétiques en sens axialement inverse soient engendrés et que le couplage inductif desdites bobines (2, 4) soient affaibli quand ledit élément de l'influence plonge dans ledit interstice (18).

2.  Détecteur inductif de parcours ou de l'angle de rotation selon la revendication 1, **caractérisé en ce que** lesdites bobines (2, 4) sont montées en série l'une relativement à l'autre.

3. Détecteur inductif de parcours ou de l'angle de rotation selon une quelconque des revendications précédentes, **caractérisé en ce que** ledit élément de l'influence (8) est fait, au moins en partie, d'un matériau ferromagnétique.

4. Détecteur inductif de parcours ou de l'angle de rotation selon une quelconque des revendications précédentes, **caractérisé en ce que** ledit interstice axial (18) est petit, comparé devant l'étendue longitudinale desdites bobines (2, 4) le long de la direction dudit axe des bobines (9).

5. Détecteur inductif de parcours ou de l'angle de rotation selon une quelconque des revendications précédentes, **caractérisé en ce que** ledit élément de l'influence (8) est conçu pour une révolution autour d'un arbre (6) parallèle audit axe des bobines (9) pour la transmission d'un mouvement de révolution à détecter, et pour plonger dans ledit interstice axial (18) à un degré de recouvrement avec les champs magnétiques engendrés par lesdites bobines (2, 4), en fonction de sa position de révolution.

6. Détecteur inductif de parcours ou de l'angle de rotation selon la revendication 5, **caractérisé en ce que** ledit élément de l'influence est un corps à logement excentrique relativement audit arbre (6).

7. Détecteur inductif de parcours ou de l'angle de rotation selon la revendication 5 ou 6, **caractérisé en ce que** la section en coupe dudit élément de l'influence rotatif (8) est conçu d'une telle façon, que la résistance inductive ($L_1$, $L_2$, M) desdites bobines (2, 4) présente une dépendance linéaire de l'angle de révolution dudit élément de l'influence rotatif (8) au moins au-dedans d'un segment de l'angle de révolution plus petit que ou égal à 360 degrés.

8. Détecteur inductif de parcours ou de l'angle de rotation selon une quelconque des revendications 5 à 7, **caractérisé en ce que** ledit élément de l'influence rotatif (8) est disposé pour pivotement dans un plan orthogonal sur ledit arbre (6) ou orthogonal sur ledit axe des bobines (9).

9. Détecteur inductif de parcours ou de l'angle de rotation selon une quelconque des revendications 5 à 8, **caractérisé en ce que** ledit élément de l'influence rotatif (8) se recouvre avec un prolongement axial imaginaire desdites espaces intérieures (22, 24) à un degré de recouvrement qui fait fonction de la position de révolution de l'élément.

10. Détecteur inductif de parcours ou de l'angle de rotation selon une quelconque des revendications 5 à 9, **caractérisé en ce que** ledit élément de l'influence est interposé entre les faces frontales (14, 16) desdites bobines (2, 4) en au moins une position de révolution.

11. Détecteur inductif de parcours ou de l'angle de rotation selon au moins une quelconque des revendications précédentes, **caractérisé en ce qu'**au moins une bobine (2, 4) présente une espace intérieure de bobine (22, 24) à une coupe transversale cylindrique ou de n'importe quelle forme.

12. Détecteur inductif de parcours ou de l'angle de rotation selon au moins une quelconque des revendications précédentes, **caractérisé en ce qu'**au moins une desdites bobines (2, 4) comprend un noyau de bobine en un matériau ferromagnétique ou en une matière synthétique.

FIG.1

FIG.2

FIG.3

FIG.5

FIG.4a

FIG.4b

FIG.4c

EP 2 176 624 B1

FIG.6a

FIG.6b

FIG.6c

12

**IN DER BESCHREIBUNG AUFGEFÜHRTE DOKUMENTE**

**In der Beschreibung aufgeführte Patentdokumente**

- EP 0797078 A1
- FR 2790313 A